# EUROPEAN PATENT APPLICATION

(11) **EP 4 718 182 A1**
(43) Date of publication of application: **01.04.2026**
(21) Application number: 25184279.5
(22) Date of filing: 20.06.2025
(51) Int. Cl.: G05B 19/418

(54) **METHOD AND APPARATUS FOR CONTROLLING STATION-PASSING OF YARN SPINDLE, ELECTRONIC DEVICE AND STORAGE MEDIUM**

(30) Priority: 29.09.2024 CN 202411375294
(71) Applicant: Zhejiang Hengyi Petrochemical Co., Ltd., Zhejiang 311200 (CN); Zhejiang Hengyi Polyamide Co., Ltd., Hangzhou, Zhejiang 311223 (CN)
(72) Inventor: PENG, Xiantao, Hangzhou, Zhejiang 311200 (CN); QIU, Yibo, Hangzhou, Zhejiang 311200 (CN); JIN, Junliang, Hangzhou, Zhejiang 311200 (CN); WANG, Dandan, Hangzhou, Zhejiang 311200 (CN); CHEN, Yihe, Hangzhou, Zhejiang 311200 (CN); WU, Xuan, Hangzhou, Zhejiang 311200 (CN); GAO, Jiabo, Hangzhou, Zhejiang 311200 (CN)
(74) Representative: Bringer IP

(57) **Abstract**

A method for controlling station-passing of yarn spindle is provided, relating to the field of computers and automatic control. The method includes: receiving (S201) the target operational data sent from a target controller by using a second controller as the target controller; sending (S202) the target operational data to the MES responsive to determining that a communication link between the first controller and the MES is in a normal state, where the MES is configured to obtain a target station-passing instruction based on the target operational data and send the target station-passing instruction to the first controller; receiving (S203) the target station-passing instruction sent from the MES; and sending (S204) the target station-passing instruction to the target controller, where the target controller is configured to perform the station-passing control operation for the yarn spindle product passing through a target station corresponding to the target controller.

## Description

### TECHNICAL FIELD

The present disclosure relates to the field of computer and automatic control, and in particular, to a method and apparatus for controlling station-passing of yarn spindle, an electronic device, and a storage medium.

### BACKGROUND

In the production process of a yarn spindle product, establishing a highly efficient production line is an essential core element for ensuring productivity and production efficiency. A plurality of closely connected and highly coordinated yarn spindle stations are distributed along the production line, each responsible for performing a specific production operation on the yarn spindle product. Ensuring that the yarn spindle product can be efficiently and accurately transferred and/or a decision can be made regarding whether to proceed to the next station when passing through the yarn spindle station is crucial for maintaining the efficient operation of the production line.

### SUMMARY

The present disclosure provides a method and apparatus for controlling station-passing of yarn spindle, an electronic device, and a storage medium to solve or mitigate one or more technical problems in the related art.

According to a first aspect, provided is a method for controlling station-passing of a yarn spindle, applied to a first controller included in a system for controlling station-passing of the yarn spindle, and the system for controlling station-passing of the yarn spindle further including an MES and a plurality of second controllers, which are in communication with the first controller, where the second controller of the plurality of second controllers has a corresponding yarn spindle station for acquiring operational data related to the yarn spindle station and executing station-passing control operation for a yarn spindle product passing through the yarn spindle station; and
the method includes:
receiving the target operational data sent from a target controller by using the second controller of the plurality of second controllers as the target controller;
sending the target operational data to the MES responsive to determining that a communication link between the first controller and the MES is in a normal state, where the MES is configured to obtain a target station-passing instruction based on the target operational data and send the target station-passing instruction to the first controller;
receiving the target station-passing instruction sent from the MES; and
sending the target station-passing instruction to the target controller, where the target controller is configured to perform the station-passing control operation for the yarn spindle product passing through a target station corresponding to the target controller based on the target station-passing instruction.

According to a second aspect, provided is an apparatus for controlling station-passing of yarn spindle, applied to a first controller included in a system for controlling station-passing of the yarn spindle, and the system for controlling station-passing of the yarn spindle further including a manufacturing execution system, MES, and a plurality of second controllers, which are in communication with the first controller, where the second controller of the plurality of second controllers has a corresponding yarn spindle station for acquiring operational data related to the yarn spindle station and executing station-passing control operation for a yarn spindle product passing through the yarn spindle station; and
the apparatus includes:
an operational data receiving unit, configured to receive target operational data sent from a target controller by using a second controller of a plurality of second controllers as the target controller;
an operational data sending unit, configured to send the target operational data to the MES responsive to determining that a communication link between the first controller and the MES is in a normal state, where the MES is configured to obtain a target station-passing instruction based on the target operational data and send the target station-passing instruction to the first controller;
a station-passing instruction receiving unit, configured to receive the target station-passing instruction sent from the MES; and
a station-passing instruction sending unit, configured to send the target station-passing instruction to the target controller, where the target controller is configured to perform station-passing control operation on the yarn spindle product passing through a target station corresponding to the target controller based on the target station-passing instruction.

According to a third aspect, provided is an electronic device, including:
at least one processor; and
a memory connected in communication with the at least one processor,
where the memory stores an instruction executable by the at least one processor, and the instruction, when executed by the at least one processor, enables the at least one processor to execute the method of any embodiment of the present disclosure.

According to a fourth aspect, provided is a non-transitory computer-readable storage medium storing a computer instruction thereon, where the computer instruction is used to cause a computer to execute the method of any embodiment of the present disclosure.

This technical scheme of the present disclosure ensures that the yarn spindle product can be efficiently and accurately transferred and/or a decision can be made regarding whether to proceed to the next station when passing through the yarn spindle station, thereby maintaining the efficient operation of the production line.

It should be understood that the statements in this section are not intended to identify key or critical features of the embodiments of the present disclosure, nor are they intended to limit the scope of the present disclosure. Other features of the present disclosure will become apparent from the following description.

### BRIEF DESCRIPTION OF THE DRAWINGS

In the drawings, like reference characters designate like or similar parts or elements throughout the accompanying figures unless otherwise specified. The figures are not necessarily drawn to scale. It should be understood that these figures depict only some of the embodiments in accordance with the disclosure and are not to be considered limiting of the scope thereof.
FIG. 1 is a structural diagram schematically illustrating a system for controlling station-passing of a yarn spindle according to an embodiment of the present disclosure.
FIG. 2 is a flowchart schematically illustrating a method for controlling station-passing of a yarn spindle according to an embodiment of the present disclosure.
FIG. 3 is a flowchart illustrating part of process involved in the method for controlling station-passing of the yarn spindle according to an embodiment of the present disclosure.
FIG. 4 is a structural block diagram schematically illustrating an apparatus for controlling station-passing of a yarn spindle according to an embodiment of the present disclosure.
FIG. 5 is a structural block diagram schematically illustrating an electronic device according to an embodiment of the present disclosure.

### DETAILED DESCRIPTION

The present disclosure will be further described in detail below with reference to the accompanying figures. In the figures, like reference numerals indicate functionally identical or similar elements. While various aspects of the embodiments are presented in the figures, the figures are not necessarily drawn to scale unless specifically indicated.

In addition, in order to better explain the present disclosure, numerous specific details will be given in the following specific implementations. Those having ordinary skill in the art should be understood that the present disclosure may be performed without certain specific details. In some examples, methods, means, elements and circuits well known to those having ordinary skill in the art are not described in detail, in order to highlight the subject matter of the present disclosure.

As described in the background, in the production process of the yarn spindle product, establishing a highly efficient production line is an essential core element for ensuring productivity and production efficiency. A plurality of closely connected and highly coordinated yarn spindle stations are distributed along the production line, each responsible for performing a specific production operation on the yarn spindle product. Theses yarn spindle stations can include a weighing station for weighing the yarn spindle product, an appearance inspection station for intelligently inspecting the appearance of the yarn spindle product, and a bagging station for bagging the yarn spindle product. Ensuring that the yarn spindle product can be efficiently and accurately transferred and/or a decision can be made regarding whether to proceed to the next station when passing through the yarn spindle station is crucial for maintaining the efficient operation of the production line. Based on this, to ensure that the yarn spindle product can be efficiently and accurately transferred and/or a decision can be made regarding whether to proceed to the next station when passing through the yarn spindle station, thereby maintaining the efficient operation of the production line, an embodiment of the disclosure provides a method for controlling station-passing of a yarn spindle.

Before describing the method for controlling the station-passing of the yarn spindle according to the embodiment of the present disclosure, it should be noted that, in the embodiment of the present disclosure, the main type of the yarn spindle product can include at least one of Partially Oriented Yarns (POY), Fully Drawn Yarns (FDY), or Draw Textured Yarns (DTY) (or called low stretch yarns). For example, the type of the yarn spindle product can specifically include Polyester Partially Oriented Yarns, Polyester Fully Drawn Yarns, Polyester Drawn Yarns, and Polyester Draw Textured Yarns.

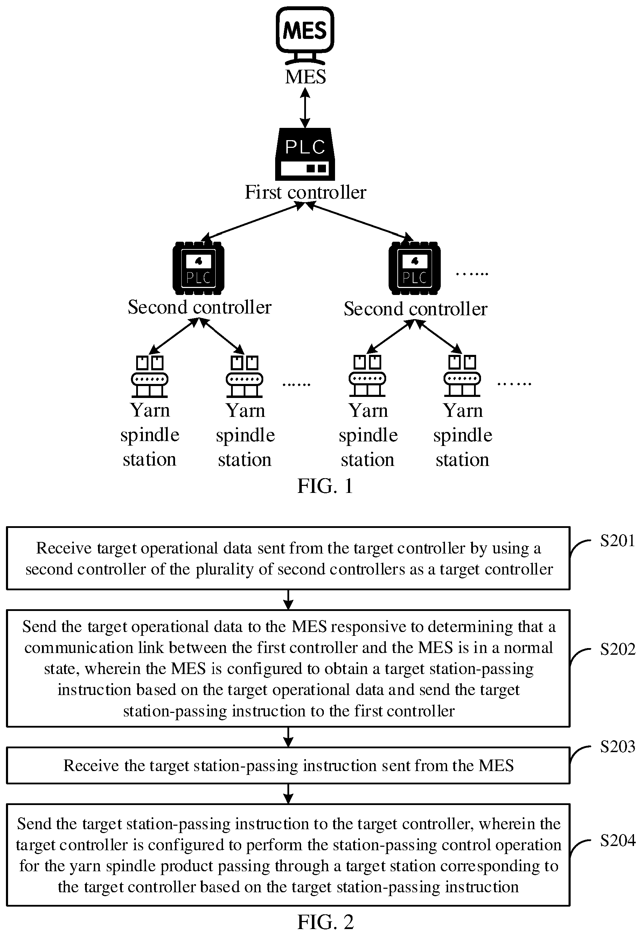

Hereinafter, the method for controlling the station-passing of the yarn spindle according to the embodiment of the present disclosure will be described with reference to FIGS. 1 and 2.

First, FIG. 1 is a structural diagram schematically illustrating a system for controlling station-passing of a yarn spindle according to an embodiment of the present disclosure, including a first controller, and a Manufacturing Execution System (MES) and a plurality of second controllers, which are in communication with the first controller. The first controller can be a Programmable Logic Controller (PLC); the second controllers can also be PLCs; the MES can be applied to a terminal device or a server. Here, the terminal device can be a workstation, a mainframe computer, a conventional computer (e.g., a desktop computer, a notebook computer), or other similar computing device.

In the embodiment of the present disclosure, each of the plurality of second controllers corresponds to (at least one) yarn spindle station and is configured to acquire operational data related to the yarn spindle station. The operational data may include equipment state and quality control reference data obtained by the production management and control equipment in the production process of the yarn spindle product, and can further include a production progress. Here, for example, the equipment state may include an operation state, a fault record, a maintenance condition of the production management and control equipment; the quality control reference data may include a weight of the yarn spindle product and an appearance inspection result of the yarn spindle; the production progress can include completion times for various production stages and current yield statistics. For example, if the yarn spindle station is a weighing station, the operational data related to the weighing station may include the weight of the yarn spindle (which falls under the quality control reference data) obtained by a weighing sensor (which is part of the production management and control equipment) in the production process of the yarn spindle product. For another example, if the yarn spindle station is an appearance inspection station, the operational data related to the appearance inspection station may include a yarn spindle appearance inspection result (which falls under the quality control reference data) obtained by an appearance inspection device (which is part of the production management and control equipment) in the production process of the yarn spindle product.

For each of the plurality of second controllers, after the second controller acquires the operational data related to its corresponding yarn spindle station and sends it to the first controller and the first controller sends the operational data to the MES, the MES can obtain a station-passing instruction related to the yarn spindle station based on the operational data and send the station-passing instruction to the first controller, and the first controller forwards the station-passing instruction to the second controller, enabling the second controller to execute a station-passing control operation for the yarn spindle product passing through the yarn spindle station based on the station-passing instruction. The station-passing control operation can be implemented using station-passing management and control equipment (such as yarn spindle shunting equipment and a transfer robot) installed at the yarn spindle station; the station-passing control operation is used to control the flow of the yarn spindle product passing through the yarn spindle station and/or to control whether the yarn spindle product should pass through the station (allowing or prohibiting station-passing).

Refer to FIG. 2 which is a flowchart schematically illustrating a method for controlling station-passing of a yarn spindle according to an embodiment of the present disclosure, and the method is applied to a first controller included in a system for controlling station-passing of the yarn spindle. Further, it should be noted that while the flowchart illustrates a logical sequence, in some cases, the steps shown or described may be executed in a different order.

At Step S201, target operational data sent from a target controller is received by using a second controller of the plurality of second controllers as the target controller.

At least one of the yarn spindle stations corresponding to the target controller includes a target station, and the target controller can acquire operational data related to the target station. In the embodiment of the present disclosure, for convenience of description, the operational data related to the target station may be used as target operational data.

At Step S202, the target operational data is sent to the MES responsive to determining that a communication link between the first controller and the MES is in a normal state.

The first controller may establish a communication link with the MES through a network or Management Interface (MI). After receiving the target operational data sent from the target controller, the first controller can convert the target operational data according to a preset data format to obtain format-converted target operational data which can be processed by the MES, and sends the format-converted target operational data to the MES in the case where the communication link between the first controller and the MES is determined to be in the normal state.

In addition, in the embodiment of the disclosure, the MES is configured to obtain a target station-passing instruction based on the target operational data (e.g., the format-converted target operational data), and send the target station-passing instruction to the first controller. The target station-passing instruction is used to instruct the target controller to perform station-passing control operation on a yarn spindle product passing through the target station.

At Step S203, the target station-passing instruction sent from the MES is received.

At Step S204, the target station-passing instruction is sent to the target controller.

The target controller is configured to perform the station-passing control operation for the yarn spindle product passing through a target station based on the target station-passing instruction. Here, the station-passing control operation may be implemented by a station-passing management and control equipment provided at a target station corresponding to the target controller; the station-passing control operation is used to control the flow of the yarn spindle product passing through the target station and/or to control whether the yarn spindle product should pass through the station.

By adopting the method for controlling the station-passing of the yarn spindle according to the embodiment of the present disclosure, on the one hand, the first controller serves as an intermediate layer between the multiple second controllers and the MES. This enables centralized management and integration of operational data through the first controller, reduces the data processing burden on the MES, enhances the scalability and security of the system for controlling the station-passing of the yarn spindle, and simplifies the network structure of the system for controlling the station-passing of the yarn spindle, thereby improving the stability of the system for controlling the station-passing of the yarn spindle. On the other hand, after receiving the target operational data sent from the target controller, the first controller sends the target operational data to the MES only when the communication link between the first controller and the MES is determined to be in a normal state. This prevents the case where the target operational data is sent to the MES when the communication link between the first controller and the MES is in an abnormal state to incur potential damage or loss of the target operational data. As a result, the target operational data can be accurately received by the MES, ensuring that the MES obtains an accurate station-passing instruction based on the target operational data. This allows the target controller to precisely execute the station-passing control operation for the yarn spindle product passing through the target station based on the station-passing instruction. In other words, it ensures that the yarn spindle product can be efficiently and accurately transferred and/or a decision can be made regarding whether to proceed to the next station when passing through the yarn spindle station, thereby maintaining the efficient operation of the production line.

Additionally, it should be noted that in the embodiment of the present disclosure, after receiving the target operational data, the MES may determine a station-passing evaluation mechanism corresponding to the target operational data based on data attribute of the target operational data, and generate the target station-passing instruction according to the station-passing evaluation mechanism based on the target operational data.

For example, if the target operational data is an appearance inspection result of the yarn spindle, the station-passing evaluation mechanism corresponding to the target operational data may be as follows: if the appearance inspection result indicates that the yarn spindle product is classified as an S-grade product, a first station-passing instruction is obtained (the station-passing control operation corresponding to the first station-passing instruction is to divert the yarn spindle product from the main production line to a first production line); if the appearance inspection result indicates that the yarn spindle product is classified as an A-grade product, a second station-passing instruction is obtained (the station-passing control operation corresponding to the second station-passing instruction is to divert the yarn spindle product from the main production line to a second production line); and if the appearance inspection result indicates that the yarn spindle product is classified as a B-grade product, a third station-passing instruction is obtained (the station-passing control operation corresponding to the third station-passing instruction is to divert the yarn spindle product from the main production line to a third production line).

As another example, if the target operational data is weight of the yarn spindle, the station-passing evaluation mechanism corresponding to the target operational data may be as follows: if the weight of the yarn spindle falls within a preset weight range, a first station-passing instruction is obtained (the station-passing control operation corresponding to the first station-passing instruction is to allow station-passing); if the weight of the yarn spindle exceeds the preset weight range, a second station-passing instruction is obtained (the station-passing control operation corresponding to the second station-passing instruction is to prohibit station-passing). The preset weight range can be set according to actual application requirements, which is not limited by the embodiment of the present disclosure.

In some optional implementations, the "determining that the communication link between the first controller and the MES is in the normal state" at Step S202 may include:
generating a communication detection request;
sending the communication detection request to the MES, where the MES is configured to generate detection response information corresponding to the communication detection request and send the detection response information to the first controller; and
determining that the communication link between the first controller and the MES is in the normal state in the case where the detection response information sent from the MES is received within a preset waiting duration.

In an example, the communication detection request may be characterized as HB_REQUEST_MSG, which may specifically include:
026MT=HB**, ST=10086***, END
Here, "026" is used to characterize a message length of communication detection request; "MT=HB**" is used to characterize a message type of the communication detection request as heartbeat request information; "ST=10086***" is used to identify the first controller; and "END" is an end flag of the communication detection request.

In an example, the detection response information can be characterized as HB_RESPONSE_MSG, which may specifically include:
026MT=HBS*, ST=10086***, END
Here, "026" is used to characterize a message length of the detection response information; "MT=HBS*" is used to characterize a message type of the detection response information as heartbeat response information; "ST=10086***" is used to identify the first controller; and "END" is an end flag of the detection response information.

In addition, in the embodiment of the present disclosure, the communication detection request may be generated in the case where a preset detection requirement is satisfied. The preset detection requirement may include that, in the case that the heartbeat detection mechanism is started (i.e., HB_ENABLED=1) and a timing duration of a heartbeat timer is greater than or equal to a preset heartbeat interval (i.e., HB_TIMER>=HB_INTERVAL), a preset request sending requirement is also satisfied. The preset request sending requirement may include as follows:
a communication detection request is null (i.e., HB_REQUEST_MSG=");
a detection response information is null (i.e., HB_RESPONSE_MSG=");
a heartbeat sent flag is reset (i.e., HB_SENT=0); and
a heartbeat received flag is reset (i.e., HB_RECEIVED=0).

Here, the preset waiting duration may be set according to actual application requirements, for example, may be set to 2S, which is not limited in the embodiment of the present disclosure.

In this way, in the embodiment of the present disclosure, the detection of whether the communication link between the first controller and the MES is in the normal state can be actively initiated by generating and sending the communication detection request. This active detection mechanism allows for timely confirmation when the communication link between the first controller and the MES is in the normal state, ensuring that the target operational data can be sent to the MES promptly, reducing transmission delay of the target operational data, and thereby more effectively maintaining the efficient operation of the production line.

Further, in the embodiment of the present disclosure, after determining that the communication link between the first controller and the MES is in the normal state and sending the target operational data to the MES, a heartbeat result flag may be set (i.e., HB_OK=1); alternatively, after determining that the communication link between the first controller and the MES is in the normal state, the heartbeat result flag is set (i.e., HB_OK=1), and then the target operational data may be sent to the MES. Thereafter, the heartbeat sent flag is set again (i.e., HB_SENT=1), and the timing length of the heartbeat timer is reset (i.e., HB_TIMER=0).

In some optional embodiments, the method for controlling the station-passing of the yarn spindle may further include:
identifying the detection response information to obtain an identification result of the detection response information in the case where the detection response information sent from MES is received within the preset waiting duration; and
generating a first response record in the case where the identification result meets a preset identification requirement, where the first response record is used to represent that the detection response information belongs to a correct response; or
generating a second response record in the case where the identification result does not meet the preset identification requirement, where the second response record is used to represent that the detection response information belongs to an error response.

The operation of identifying the detection response information may involve identifying the message length of the detection response information to obtain the identification result of the detection response information (i.e., the message length), and in the case where the identification result of the detection response information is equal to a preset length threshold (e.g., 26), determining that the identification result meets the preset identification requirement, and generating the first response record to represent that the detection response information belongs to the correct response; in the case where the identification result of the detection response information is not equal to the preset length threshold, determining that the identification result does not meet the preset identification requirement, and generating the second response record to represent that the detection response information belongs to the error response. Here, the second response record may be marked by an error code 3586.

In this way, in the embodiment of the present disclosure, if the detection response information sent from the MES is received within the preset waiting duration, the detection response information can be identified to obtain the identification result of the detection response information. After that, if the identification result meets the preset identification requirement, the first response record can be generated to represent that the detection response information belongs to a correct response, or if the identification result does not meet the preset identification requirement, the second response record can be generated to represent that the detection response information belongs to the error response. As such, when the generation of the second response record is detected, it can be determined that the MES has a potential safety hazard that may affect the stability, so that a processing measure can be correspondingly taken in advance to optimize the MES.

Further, in the embodiment of the present disclosure, after receiving the detection response information sent from the MES within the preset waiting duration, identifying the detection response information to obtain its identification result, and generating the first response record when the identification result meets the preset identification requirement, the detection response information can be reset (i.e., HB_RESPONSE_MSG = 0), and the heartbeat received flag can be set (i.e., HB_RECEIVED = 1). Thereafter, the heartbeat sent flag can be reset (i.e., HB_SENT = 0), and the heartbeat received flag can also be reset (i.e., HB_RECEIVED = 0).

Similarly, in the embodiment of the present disclosure, after receiving the detection response information sent by the MES within the preset waiting duration, identifying the detection response information to obtain its identification result, and generating the second response record when the identification result does not meet the preset identification requirement, the heartbeat sent flag can be reset (i.e., HB_SENT=0), and the heartbeat received flag can be reset (i.e., HB_RECEIVED=0).

In some optional implementations, the "generating the first response record" may include:
acquiring a first timestamp recorded when the first controller receives the detection response information sent from the MES;
updating a historical heartbeat count value to obtain a current heartbeat count value; and
generating the first response record based on the first timestamp and the current heartbeat count value.

The historical heartbeat count value can be obtained by:
in the case where a preset heartbeat storage space of the first controller is empty, randomly generating a first heartbeat count value as the historical heartbeat count value; and in the case where the preset heartbeat storage space of the first controller is not empty, taking a second heartbeat count value stored in the preset heartbeat storage space as the historical heartbeat count value.

In an example, after obtaining the historical heartbeat count value, a "+1" operation can be performed on the historical heartbeat count value to obtain the current heartbeat count value, and the first response record can be generated based on the first timestamp and the current heartbeat count value. For example, the first response record can be formed by using the first timestamp and the current heartbeat count value.

It can be understood that, in the embodiment of the present disclosure, when acquiring the first timestamp recorded when the first controller receives the detection response information sent from the MES, updating the historical heartbeat count value to obtain the current heartbeat count value and generating the first response record based on the first timestamp and the current heartbeat count value, the current heartbeat count value can also be used as a new second heartbeat count value and stored in the preset heartbeat storage space, so as to replace the old second heartbeat count value stored in the preset heartbeat storage space with the new second heartbeat count value.

In this way, in the embodiment of the present disclosure, the first timestamp recorded when the first controller receives the detection response information sent from the MES can be obtained, the historical heartbeat count value can be updated to obtain the current heartbeat count value, and the first response record can be generated based on the first timestamp and the current heartbeat count value. As such, when the second response record or other abnormal communication records subsequently appear, a larger-range specified time period can be obtained based on the first response record and the subsequently appearing second response record or other abnormal communication records. Then, a work log of the MES can be queried based on the larger-range specified time period, so that the potential safety hazard that may affect the stability or existing stability issues can be accurately and timely located in the MES, and the processing measure can be correspondingly taken to optimize the MES.

In some optional implementations, the "generating the second response record" may include:
acquiring a second timestamp recorded when the first controller sends the communication detection request to the MES;
acquiring a third timestamp recorded when the first controller receives the detection response information sent from the MES; and
generating the second response record based on the second timestamp and the third timestamp.

In an example, the second response record can be formed by the second timestamp and the third timestamp. For example, a specified time period, which is formed with the second timestamp as a start time point and the third timestamp as an end time point, is used as the second response record.

Based on the above examples, in the embodiment of the present disclosure, when the generation of the second response record is detected, it can be determined that the MES has a potential safety hazard that may affect the stability. The work log of the MES can be queried based on the specified time period represented by the second response record to accurately and timely locate the potential safety hazard existing in the MES, so that the processing measure can be correspondingly taken to optimize the MES.

In another example, the second response record may also be generated by:
acquiring a first query time based on the second timestamp and the third timestamp;
acquiring first query content; and
generating the second response record based on the first query time and the first query content.

The first query time may be a specified time period starting from the second timestamp and ending at the third timestamp; the first query content can include at least one of thread invocation mechanism or hardware device performance of the MES. Here, the hardware device performance may include Central Processing Unit (CPU) occupancy, memory occupancy, and input/output performance of the disk, for example.

Based on the above example, in the embodiment of the present disclosure, when the generation of the second response record is detected, it can be determined that the MES has a potential safety hazard that may affect the stability. Then, based on the first query time included in the second response record, the part of the work log of the MES related to the thread invocation mechanism and the hardware device performance can be queried to accurately and timely locate the potential safety hazard existing in the MES, so that the processing measure can be correspondingly taken to optimize the MES.

In summary, in the above manner, in the embodiment of the present disclosure, the second timestamp recorded when the first controller sends the communication detection request to the MES and the third timestamp recorded when the first controller receives the detection response information sent from the MES can be acquired, and then the second response record is generated based on the second timestamp and the third timestamp. As such, when the generation of the second response record is detected, it can be determined that the MES has a potential safety hazard that may affect the stability. The work log of the MES can be queried based on the second response record to accurately and timely locate the potential safety hazard existing in the MES, so that the processing measure can be correspondingly taken to optimize the MES.

In some optional embodiments, the method for controlling the station-passing of the yarn spindle may further include:
generating an anomaly detection result in the case where detection response information sent from MES is not received within a preset waiting duration, where the anomaly detection result is used to represent that the communication link between the first controller and the MES is in an abnormal state;
updating historical anomaly count N based on the anomaly detection result to obtain current anomaly count N+1, where N is an integer more than or equal to 0, and current anomaly count N+1 is used to represent that N+1 anomaly detection results are generated; and
generating a communication anomaly record in the case where the current anomaly count N+1 is greater than or equal to a preset count threshold.

The historical anomaly count N can be acquired by:
in the case where a preset anomaly count storage space of the first controller is empty, determining the historical anomaly count N to be 0; and in the case where the preset anomaly time storage space of the first controller is not empty, taking an anomaly count value stored in the preset anomaly count storage space as the historical anomaly count N.

In an example, after the historical anomaly count N is obtained, "+ 1" operation may be performed on the historical anomaly count N to obtain the current anomaly count N+1, and in the case where that the current anomaly count N+1 is greater than or equal to the preset count threshold, a communication anomaly record is generated. Here, the communication anomaly record may be identified by an error code 3306.

It should be noted that, in the embodiment of the present disclosure, when an anomaly detection result is generated in the case where the detection response information sent from MES is not received within a preset waiting duration and the historical anomaly count N is updated based on the anomaly detection result to obtain current anomaly count N+1, the current anomaly count N+1 can be used as a new anomaly count value and stored in the preset anomaly count storage space, so as to replace the old anomaly count value stored in the preset anomaly count storage space with the new anomaly count value.

In addition, in the embodiment of the present disclosure, the preset count threshold may be set according to actual application requirements, for example, may be set to 3, which is not limited in the embodiment of the present disclosure.

In this way, in the embodiment of the present disclosure, the anomaly detection result may be generated in the case where the detection response information sent from the MES is not received within the preset waiting duration, the historical anomaly count N is updated based on the anomaly detection result to obtain the current anomaly count N+1, and the communication anomaly record is generated when the current anomaly count N+1 is greater than or equal to the preset count threshold. As such, when the generation of the communication abnormality record is detected, it can be determined that the MES has the stability problem, so that the processing measure can be correspondingly taken to optimize the MES.

Further, in the embodiment of the present disclosure, after generating the anomaly detection result in the case where the detection response information sent from an MES is not received within the preset waiting duration and updating the historical anomaly number N based on the anomaly detection result to obtain the current anomaly number N+1, the communication anomaly record can be generated first and then the heartbeat result flag can be reset (i.e., HB_OK=0) in the case where the current anomaly number N+1 is greater than or equal to the preset number threshold; alternatively, the heartbeat result flag can be reset (i.e., HB_OK=0) first, and then the communication anomaly record can be generated. Thereafter, the heartbeat sent flag is reset (i.e., HB_SENT=0), and the heartbeat received flag is reset (i.e., HB_RECEIVED=0).

In addition, it should be noted that, in the embodiment of the present disclosure, after generating the anomaly detection result in the case where the detection response information sent from an MES is not received within the preset waiting duration and updating the historical anomaly number N based on the anomaly detection result to obtain the current anomaly number N+1, the communication detection request can be cleared (i.e., HB_REQUEST_MSG=") when the current anomaly number N+1 is smaller than the preset number threshold.

In some optional implementations, the "generating the communication anomaly record" may include:
acquiring N+1 fourth timestamps in one-to-one correspondence with the N+1 abnormal detection results; and
generating the communication anomaly record based on the N+1 fourth timestamps.

In the embodiment of the present disclosure, each anomaly detection result in the N+1 anomaly detection results may be used as a target detection result, and a timestamp recorded when the first controller sends the communication detection request corresponding to the target detection result to the MES is acquired and used as a fourth timestamp corresponding to the target detection result, thereby acquiring the N+1 fourth timestamps in one-to-one correspondence with the N+1 abnormal detection results.

Further, in an example, the communication anomaly record can be generated based only on the N+1 fourth timestamps. For example, the earliest first standby timestamp and the latest second standby timestamp may be determined from the N+1 fourth timestamps, and a specified time period, which is formed with the first standby timestamp as a start time point and the second standby timestamp as an end time point, is used as the communication anomaly record.

Based on the above example, in the embodiment of the present disclosure, it can be determined that the MES has the stability problem when the generation of the communication anomaly record is detected. The work log of the MES can be queried based on the specified time period represented by the second response record to timely and accurately locate the existing stability problem in the MES, so that the processing measure can be correspondingly taken to optimize the MES.

In another example, the communication anomaly record may also be generated by:
obtaining the second query time based on the N+1 fourth timestamps;
obtaining second query content; and
generating the communication anomaly record based on the second query time and the second query content.

The second query time period may be obtained based only on the N+1 fourth timestamps. For example, the earliest third standby timestamp and the latest fourth standby timestamp can be determined from the N+1 fourth timestamps. Then, a specified time period, which is formed with the third standby timestamp as a start time and the fourth standby timestamp as an end time, is used as the second query time period.

Further, in the embodiment of the present disclosure, the second query content may include at least one of message receiving mechanism, thread invocation mechanism, or hardware device performance of the MES. Here, the hardware device performance may include CPU occupancy, memory occupancy, disk input/output performance, for example.

Based on the above example, in the embodiment of the present disclosure, when the generation of the second response record is detected, it can be determined that the MES has the existing stability problem in the MES. Then, based on the second query time included in the second response record, the part of the work log related to the message receiving mechanism, the thread invocation mechanism and the hardware performance can be queried to accurately and timely locate the existing stability problem in the MES, so that the processing measure can be correspondingly taken to optimize the MES.

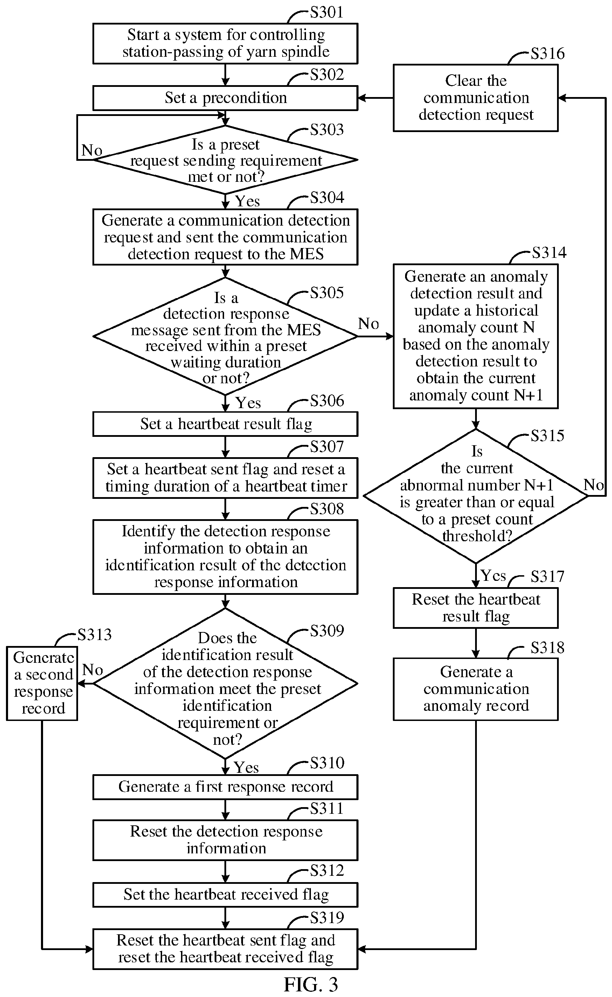

Hereinafter, a part of process involved in the method for controlling station-passing of the yarn spindle according to an embodiment of the present disclosure will be described with reference to FIG. 3.

At Step S301, a system for controlling station-passing of yarn spindle is started.

At Step S302, a precondition is set.

In the embodiment of the present disclosure, the precondition includes that the heartbeat detection mechanism is activated (i.e., HB_ENABLED = 1), and the timing duration of the heartbeat timer is greater than or equal to a preset heartbeat interval (i.e., HB_TIMER >= HB_INTERVAL).

At Step S303, whether a preset request sending requirement is met is judged.

The preset request sending requirement may include as follows:
a communication detection request is null (i.e., HB_REQUEST_MSG=");
a detection response information is null (i.e., HB_RESPONSE_MSG=");
a heartbeat sent flag is reset (i.e., HB_SENT=0); and
a heartbeat received flag is reset (i.e., HB_RECEIVED=0).

In the embodiment of the present disclosure, in the case where the preset request sending requirement is not satisfied, the process may continue to proceed to Step S303; in the case where the preset request sending requirement is satisfied, the process may proceed to Step S304.

At Step S304, the communication detection request is generated and the communication detection request is sent to the MES.

The MES is used to generate the detection response information corresponding to the communication detection request and send the detection response information to the first controller.

In an example, the communication detection request may be characterized as HB_REQUEST_MSG, which may specifically include:
026MT=HB**, ST=10086***, END

Here, "026" is used to characterize a message length of communication detection request; "MT=HB**" is used to characterize a message type of the communication detection request as heartbeat request information; "ST=10086***" is used to identify the first controller; and "END" is an end flag of the communication detection request.

In an example, the detection response information can be characterized as HB_RESPONSE_MSG, which may specifically include:
026MT=HBS*, ST=10086***, END

Here, "026" is used to characterize a message length of the detection response information; "MT=HBS*" is used to characterize a message type of the detection response information as heartbeat response information; "ST=10086***" is used to identify the first controller; and "END" is an end flag of the detection response information.

At Step S305, whether a detection response message sent from the MES is received within a preset waiting duration is judged.

The preset waiting duration may be set according to actual application requirements, for example, may be set to 2S, which is not limited in the embodiment of the present disclosure.

In the embodiment of the present disclosure, in the case where the detection response information sent from the MES is received within the preset waiting duration, it can be determined that the communication link between the first controller and the MES is in a normal state, and the process proceeds to Step S306; in the case where the detection response information sent from the MES is not received within the preset waiting duration, it can be determined that the communication link between the first controller and the MES is in an abnormal state, and the process proceeds to Step S314.

Furthermore, in the embodiment of the present disclosure, after designating each of the plurality of second controllers as the target controller and receiving the target operational data sent from the target controller, the first controller sends the target operational data to the MES in the case where the communication link between the first controller and the MES is determined to be in a normal state. The MES is used to generate a target station-passing instruction based on the target operational data and send the instruction to the first controller. Subsequently, the first controller receives the target station-passing instruction from the MES and sends the target station-passing instruction to the target controller. The target controller is configured to perform the station-passing control operation for the yarn spindle product passing through the target station based on the target station-passing instruction. Here, the station-passing control operation may be implemented by station-passing control equipment provided at the target station corresponding to the target controller. The station-passing control operation is used to control the flow of the yarn spindle product passing through the target station and/or to control whether the product should pass through the station.

At Step S306, a heartbeat result flag is set (i.e., HB_OK=1).

At Step S307, a heartbeat sent flag is set (i.e., HB_SENT=1), and a timing duration of a heartbeat timer is reset (i.e., HB_TIMER=0).

At Step S308, the detection response information is identified to obtain an identification result of the detection response information.

Here, the identifying of the detection response information may include identifying a message length of the detection response information to obtain the identification result (i.e., the message length) of the detection response information.

At Step S309, whether the identification result of the detection response information meets the preset identification requirement is judged.

In some optional implementation, it may be determined that the identification result meets the preset identification requirement in the case where the identification result of the detection response information is equal to a preset length threshold; it may be determined that the identification result does not meet the preset identification requirement in the case where the identification result of the detection response information is not equal to the preset length threshold. The preset length threshold may be set according to actual application requirements, for example, may be set to 26, which is not limited in this disclosure.

In the embodiment of the present disclosure, in the case where the identification result meets the preset identification requirement, the process may proceed to Step S310; in the case where the identification result does not meet the preset identification requirement, the process may proceed to Step S313.

At Step S310, a first response record is generated.

Here, the first response record is used to represent that the detection response information belongs to a correct response.

In some optional implementations, the "generating the first response record" may include:
acquiring a first timestamp recorded when the first controller receives the detection response information sent from the MES;
updating a historical heartbeat count value to obtain a current heartbeat count value; and
generating the first response record based on the first timestamp and the current heartbeat count value.

The historical heartbeat count value can be obtained by:
in the case where a preset heartbeat storage space of the first controller is empty, randomly generating a first heartbeat count value as the historical heartbeat count value; and in the case where the preset heartbeat storage space of the first controller is not empty, taking a second heartbeat count value stored in the preset heartbeat storage space as the historical heartbeat count value.

In an example, after obtaining the historical heartbeat count value, a "+1" operation can be performed on the historical heartbeat count value to obtain the current heartbeat count value, and the first response record can be generated based on the first timestamp and the current heartbeat count value. For example, the first response record can be formed by using the first timestamp and the current heartbeat count value.

It can be understood that, in the embodiment of the present disclosure, when acquiring the first timestamp recorded when the first controller receives the detection response information sent from the MES, updating the historical heartbeat count value to obtain the current heartbeat count value and generating the first response record based on the first timestamp and the current heartbeat count value, the current heartbeat count value can also be used as a new second heartbeat count value and stored in the preset heartbeat storage space, so as to replace the old second heartbeat count value stored in the preset heartbeat storage space with the new second heartbeat count value.

At Step S311, the detection response information is reset (i.e., HB_RESPONSE_MSG=0).

At Step S312, the heartbeat received flag is set (i.e., HB_RECEIVED=1).

In the embodiment of the present disclosure, the process may proceed to Step S319 after Step S312 is executed.

At Step S313, a second response record is generated.

Here, the second response record is used to represent that the detection response information belongs to an error response. Here, the second response record may be identified by an error code 3586.

In some optional implementations, the "generating the second response record" may include:
acquiring a second timestamp recorded when the first controller sends the communication detection request to the MES;
acquiring a third timestamp recorded when the first controller receives the detection response information sent from the MES; and
generating the second response record based on the second timestamp and the third timestamp.

In an example, the second response record can be formed by the second timestamp and the third timestamp. For example, a specified time period, which is formed with the second timestamp as a start time point and the third timestamp as an end time point, is used as the second response record.

In another example, the second response record may also be generated by:
obtaining a first query time based on the second timestamp and the third timestamp;
acquiring first query content; and
generating the second response record based on the first query time and the first query content.

Here, the first query time may be a specified time period starting from the second timestamp and ending at the third timestamp; the first query content can include at least one of thread invocation mechanism or hardware device performance of the MES. Here, the hardware device performance may include CPU occupancy, memory occupancy, and input/output performance of the disk, for example.

In the embodiment of the present disclosure, the process may proceed to Step S319 after Step S313 is executed.

At Step S314, an anomaly detection result is generated, and a historical anomaly count N is updated based on the anomaly detection result to obtain the current anomaly count N+1.

Here, the abnormal detection result is used to represent that the communication link between the first controller and the MES is in an abnormal state, where N is an integer more than or equal to 0, and the current anomaly count N+1 is used to represent that N+1 abnormal detection results are generated.

The historical anomaly count N can be acquired by:
in the case where a preset anomaly count storage space of the first controller is empty, determining the historical anomaly count N to be 0; and in the case where the preset anomaly time storage space of the first controller is not empty, taking an anomaly count value stored in the preset anomaly count storage space as the historical anomaly count N.

In an example, after the historical anomaly count N is obtained, "+ 1" operation may be performed on the historical anomaly count N to obtain the current anomaly count N+1.

It should be noted that, in the embodiment of the present disclosure, when an anomaly detection result is generated in the case where the detection response information sent from MES is not received within a preset waiting duration and the historical anomaly count N is updated based on the anomaly detection result to obtain current anomaly count N+1, the current anomaly count N+1 can be used as a new anomaly count value and stored in the preset anomaly count storage space, so as to replace the old anomaly count value stored in the preset anomaly count storage space with the new anomaly count value.

At Step S315, whether the current abnormal number N+1 is greater than or equal to a preset count threshold is judged.

Here, the preset count threshold may be set according to actual application requirements, for example, may be set to 3, which is not limited in the embodiment of the present disclosure.

In the embodiment of the present disclosure, in the case where the current abnormal count N+1 is smaller than the preset count threshold, the process may proceed to Step S316; in the case where the current anomaly count N+1 is greater than or equal to the preset count threshold, the process may proceed to Step S317.

At Step S316, the communication detection request is cleared (i.e., HB_REQUEST_MSG=").

In the embodiment of the present disclosure, after Step S316 is executed, that is, after the communication detection request is cleared (i.e., HB_REQUEST_MSG="), the process may return to Step S302.

At Step S317, the heartbeat result flag is reset (i.e., HB_OK=0).

At Step S318, a communication anomaly record is generated.

Here, the communication anomaly record can be identified by an error code 3306.

In some optional implementations, the "generating the communication anomaly record" may include:
acquiring N+1 fourth timestamps in one-to-one correspondence with the N+1 abnormal detection results; and
generating the communication anomaly record based on the N+1 fourth timestamps.

In the embodiment of the present disclosure, each anomaly detection result in the N+1 anomaly detection results may be used as a target detection result, and a timestamp recorded when the first controller sends the communication detection request corresponding to the target detection result to the MES is acquired and used as a fourth timestamp corresponding to the target detection result, whereby acquiring the N+1 fourth timestamps in one-to-one correspondence with the N+1 abnormal detection results.

Further, in an example, the communication anomaly record can be generated based only on the N+1 fourth timestamps. For example, the earliest first standby timestamp and the latest second standby timestamp may be determined from the N+1 fourth timestamps, and a specified time period, which is formed with the first standby timestamp as a start time point and the second standby timestamp as an end time point, is used as the communication anomaly record.

In another example, the communication anomaly record may also be generated by:
acquiring the second query time based on the N+1 fourth timestamps;
acquiring second query content; and
generating the communication anomaly record based on the second query time and the second query content.

Here, the second query time period may be obtained based only on the N+1 fourth timestamps. For example, the earliest third standby timestamp and the latest fourth standby timestamp can be determined from the N+1 fourth timestamps. Then, a specified time period, which is formed with the third standby timestamp as a start time and the fourth standby timestamp as an end time, is used as the second query time period.

Further, in the embodiment of the present disclosure, the second query content may include at least one of message receiving mechanism, thread invocation mechanism, or hardware device performance of the MES. Here, the hardware device performance may include CPU occupancy, memory occupancy, disk input/output performance, for example.

In addition, it should be noted that in the embodiment of the present disclosure, the execution order of Steps S317 and S318 can be interchangeable, that is, Step S317 may be executed first, followed by Step S318; alternatively, Step S318 may be executed first, followed by Step S317, which is not limited by the embodiment of the present disclosure.

At Step S319, the heartbeat sent flag is reset (i.e., HB_SENT=0), and the heartbeat received flag is reset (i.e., HB_RECEIVED=0).

In the embodiment of the present disclosure, after Step S319 is executed, that is, after the heartbeat sent flag is reset (that is, HB_SENT=0) and the heartbeat received flag is reset (that is, HB_RECEIVED=0), the process may return to Step S302.

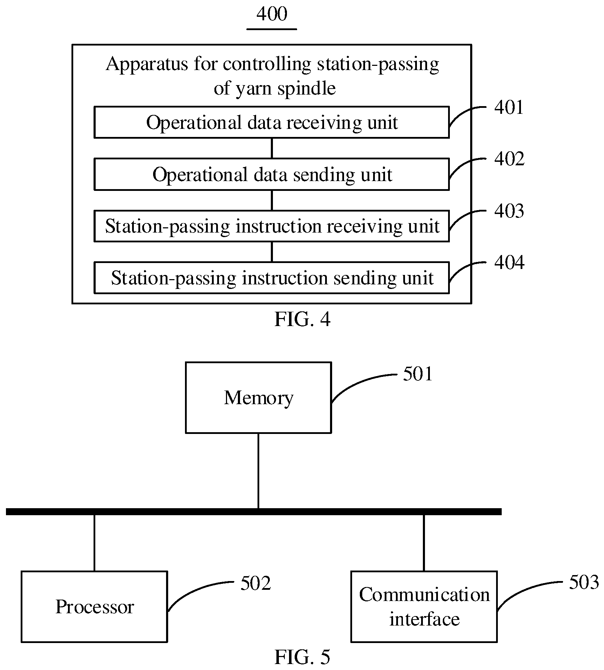

To better implement the aforementioned method for controlling the station-passing of the yarn spindle, an embodiment of the present disclosure further provides an apparatus for controlling station-passing of yarn spindle, which is applied to the first controller included in the system for controlling the station-passing of the yarn spindle. Hereinafter, the apparatus 400 for controlling station-passing of yarn spindle according to the embodiment of the present disclosure will be described with reference to the block diagram schematically shown in FIG. 4.

The apparatus 400 for controlling station-passing of yarn spindle includes:
an operational data receiving unit 401, configured to receive target operational data sent from a target controller by using a second controller of a plurality of second controllers as the target controller;
an operational data sending unit 402, configured to send the target operational data to the MES responsive to determining that a communication link between the first controller and the MES is in a normal state, where the MES is configured to obtain a target station-passing instruction based on the target operational data and send the target station-passing instruction to the first controller;
a station-passing instruction receiving unit 403, configured to receive the target station-passing instruction sent from the MES; and
a station-passing instruction sending unit 404, configured to send the target station-passing instruction to the target controller, where the target controller is configured to perform station-passing control operation on the yarn spindle product passing through a target station corresponding to the target controller based on the target station-passing instruction.

In some optional embodiments, the operational data sending unit 402 is configured to:
generate a communication detection request;
send the communication detection request to the MES, where the MES is configured to generate detection response information corresponding to the communication detection request and send the detection response information to the first controller; and
determine that the communication link between the first controller and the MES is in the normal state in the case where the detection response information sent from the MES is received within a preset waiting duration.

In some optional embodiments, the apparatus 400 for controlling station-passing of yarn spindle further includes a response record generating unit configured to:
identify the detection response information to obtain an identification result of the detection response information in the case where the detection response information sent from MES is received within the preset waiting duration; and
generate a first response record in the case where the identification result meets a preset identification requirement, where the first response record is used to represent that the detection response information belongs to a correct response; or
generate a second response record in the case where the identification result does not meet the preset identification requirement, where the second response record is used to represent that the detection response information belongs to an error response.

In some optional embodiments, the response record generating unit is configured to:
acquire a first timestamp recorded when the first controller receives the detection response information sent from the MES;
update a historical heartbeat count value to obtain a current heartbeat count value; and
generate the first response record based on the first timestamp and the current heartbeat count value.

In some optional embodiments, the response record generating unit is configured to:
acquire a second timestamp recorded when the first controller sends the communication detection request to the MES;
acquire a third timestamp recorded when the first controller receives the detection response information sent from the MES; and
generate the second response record based on the second timestamp and the third timestamp.

In some optional embodiments, the response record generating unit is configured to:
acquire a first query time based on the second timestamp and the third timestamp;
acquire first query content; and
generate the second response record based on the first query time and the first query content.

In some optional implementations, the first query content includes at least one of thread invocation mechanism or hardware device performance of the MES.

In some optional embodiments, the apparatus 400 for controlling station-passing of yarn spindle further includes an anomaly record generating unit configured to:
generate an abnormal detection result in the case where the detection response information sent from MES is not received within a preset waiting duration, where the abnormal detection result is used to represent that the communication link between the first controller and the MES is in an abnormal state;
update a historical anomaly count N based on the abnormal detection result to obtain the current anomaly count N+1, where N is an integer more than or equal to 0, and the current anomaly count N+1 is used to represent that N+1 abnormal detection results are generated; and
generate a communication anomaly record in the case where the current anomaly count N+1 is greater than or equal to a preset count threshold.

In some optional embodiments, the anomaly record generating unit is configured to:
acquire N+1 fourth timestamps in one-to-one correspondence with the N+1 abnormal detection results; and
generate the communication anomaly record based on the N+1 fourth timestamps.

In some optional embodiments, the anomaly record generating unit is configured to:
acquire the second query time based on the N+1 fourth timestamps;
acquire second query content; and
generate the communication anomaly record based on the second query time and the second query content.

In some optional implementations, the second query content includes at least one of message receiving mechanism, thread invocation mechanism, or hardware device performance of the MES.

For descriptions of specific functions and examples of each unit in the apparatus 400 for controlling the station-passing of the yarn spindle according to the embodiments of the present disclosure, reference can be made to the related descriptions of the corresponding steps in the foregoing method embodiments, and details thereof will not be repeated herein.

In the technical scheme of the disclosure, the acquisition, storage and application of the user's personal information involved are all in compliance with the provisions of relevant laws and regulations, and do not violate public order and good customs.

FIG. 5 is a block diagram of an electronic device according to an embodiment of the present disclosure. As shown in FIG. 5, the electronic device includes: a memory 510 and a processor 520, the memory 510 storing therein a computer program operable on the processor 520. The number of the memory 510 and the processor 520 may be one or more. The memory 510 may store one or more computer programs that, when executed by the electronic device, cause the electronic device to perform the methods according to the above-described method embodiments. The electronic device may further include: the communication interface 530 is used for communicating with an external device to perform data interactive transmission.

If the memory 510, the processor 520, and the communication interface 530 are implemented independently, the memory 510, the processor 520, and the communication interface 530 may connect to and communicate with each other through a bus. The bus may be an Industry Standard Architecture (ISA) bus, a Peripheral Component Interconnect (PCI) bus, an Extended ISA (EISA) bus, or the like. The bus may be divided into an address bus, a data bus, a control bus, for example. For sake of illustration, the bus is represented by only one thick line in FIG. 5, but it does not mean only one bus or one type of bus is provided.

Optionally, in an implementation, if the memory 510, the processor 520, and the communication interface 530 are integrated on a chip, the memory 510, the processor 520, and the communication interface 530 may communicate with each other through an internal interface.

It should be understood that the processor may be a Central Processing Unit (CPU) or other general-purpose processor, a Digital Signal Processing (DSP), an Application Specific Integrated Circuit (ASIC), a Field Programmable Gate Array (FPGA) or other programmable logic device, discrete gate or transistor logic device or discrete hardware components, for example. The general-purpose processor may be a microprocessor or any conventional processor. It is noted that the processor may be a processor supporting Advanced RISC Machine (ARM) architecture.

Further, optionally, the memory may include a read-only memory and a random-access memory, and may further include a nonvolatile random-access memory. The memory may be a volatile memory or a nonvolatile memory, or may include both the volatile and the nonvolatile memory. The non-volatile memory may include a Read-Only Memory (ROM), a Programmable ROM (PROM), an Erasable PROM (EPROM), an Electrically EPROM (EEPROM), or a flash Memory. The volatile memory may include a Random-Access Memory (RAM), which acts as an external cache memory. By way of example and not limitation, many forms of RAM are available, such as Static RAM (SRAM), Dynamic Random-Access Memory (DRAM), Synchronous DRAM (SDRAM), Double Data Rate SDRAM (DDR SDRAM), Enhanced SDRAM (ESDRAM), Synchlink DRAM (SLDRAM), and Direct RAMBUS RAM (DR RAM).

The above embodiments may be implemented in whole or in part by software, hardware, firmware, or any combination thereof. When implemented in software, they may be implemented in whole or in part in the form of a computer program product. The computer program product includes one or more computer instruction. The computer instruction, when loaded and executed on a computer, can all or partially generate the flows or functions described in accordance with the embodiments of the disclosure. The computer may be a general-purpose computer, a special purpose computer, a network of computers, or other programmable devices. The computer instruction can be stored in a computer-readable storage medium or transmitted from one computer-readable storage medium to another computer-readable storage medium. For example, the computer instruction can be transmitted from one website, computer, server, or data center to another website, computer, server, or data center via wire (e.g., coaxial cable, fiber optic or Digital Subscriber Line (DSL)) or wireless (e.g., infrared, Bluetooth of microwave). The computer-readable storage medium can be any available medium that can be accessed by a computer or a data storage device, such as a server and a data center, that includes one or more available medium integration. The available medium may be a magnetic medium (e.g., floppy Disk, hard Disk, magnetic tape), an optical medium (e.g., Digital Versatile Disk (DVD)), or a semiconductor medium (e.g., Solid State Disk (SSD)), for example. It should be noted that the computer-readable storage medium referred to in the disclosure can be non-volatile storage medium, i.e., non-transitory storage medium.

It will be understood by those skilled in the art that all or part of the steps for performing the above embodiments may be implemented by hardware, or may be implemented by a program instructing relevant hardware, where the program may be stored in a computer-readable storage medium, and the storage medium may be a read-only memory, a magnetic disk or an optical disk.

In the description of the embodiments of the present disclosure, the description with reference to the terms such as "one embodiment", "some embodiments", "an example", "a specific example" or "some examples" means that a particular feature, structure, material, or characteristic described in connection with the embodiment or example is included in at least one embodiment or example of the present disclosure. Furthermore, the particular features, structures, materials, or characteristics described may be combined in any suitable manner in any one or more embodiments or examples. Moreover, various embodiments or examples and features in various embodiments or examples described in this specification can be combined and grouped by one skilled in the art if there is no mutual conflict.

In the description of the embodiments of the present disclosure, the sign "/" indicates a meaning of "or", for example, A/B indicates a meaning of A or B, unless otherwise specified. The term "and/or" herein is merely an association relationship describing associated objects, and means that there may be three relationships, for example, A and/or B may mean: A alone, both A and B, and B alone.

In the description of the embodiments of the present disclosure, the terms "first", "second" and "third" are used for descriptive purposes only and should not be construed as indicating or implying relative importance or implicitly indicating the number of technical features as indicated. Thus, a feature defined as "first", "second" or "third" may explicitly or implicitly include one or more features. In the description of the embodiments of the present disclosure, "a plurality" means two or more unless otherwise specified.

The above description is intended only to illustrate embodiments of the present disclosure, and should not be taken as limiting thereof, and any modifications, equivalents and improvements made within the spirit and principle of the present disclosure will fall within the scope of the present disclosure.

## Claims

1. A method for controlling station-passing of a yarn spindle, applied to a first controller included in a system for controlling station-passing of the yarn spindle, and the system for controlling station-passing of the yarn spindle further including a manufacturing execution system, MES, and a plurality of second controllers, which are in communication with the first controller, wherein a second controller of the plurality of second controllers has a corresponding yarn spindle station for acquiring operational data related to the yarn spindle station and executing station-passing control operation for a yarn spindle product passing through the yarn spindle station;
the method comprising:
receiving (S201) the target operational data sent from a target controller by using a second controller of the plurality of second controllers as the target controller;
sending (S202) the target operational data to the MES responsive to determining that a communication link between the first controller and the MES is in a normal state, wherein the MES is configured to obtain a target station-passing instruction based on the target operational data and send the target station-passing instruction to the first controller;
receiving (S203) the target station-passing instruction sent from the MES;
sending (S204) the target station-passing instruction to the target controller, wherein the target controller is configured to perform the station-passing control operation for the yarn spindle product passing through a target station corresponding to the target controller based on the target station-passing instruction.

2. The method of claim 1, wherein determining that the communication link between the first controller and the MES is in the normal state comprises:
generating a communication detection request;
sending the communication detection request to the MES, wherein the MES is configured to generate detection response information corresponding to the communication detection request and send the detection response information to the first controller; and
determining that the communication link between the first controller and the MES is in the normal state in the case where the detection response information sent from the MES is received within a preset waiting duration.

3. The method of claim 2, further comprising:
identifying the detection response information to obtain an identification result of the detection response information in the case where the detection response information sent from MES is received within the preset waiting duration; and
generating a first response record in the case where the identification result meets a preset identification requirement, wherein the first response record is used to represent that the detection response information belongs to a correct response; or
generating a second response record in the case where the identification result does not meet the preset identification requirement, wherein the second response record is used to represent that the detection response information belongs to an error response.

4. The method of claim 3, wherein generating the first response record comprises:
acquiring a first timestamp recorded when the first controller receives the detection response information sent from the MES;
updating a historical heartbeat count value to obtain a current heartbeat count value; and
generating the first response record based on the first timestamp and the current heartbeat count value.

5. The method of claim 3, wherein generating the second response record comprises:
acquiring a second timestamp recorded when the first controller sends the communication detection request to the MES;
acquiring a third timestamp recorded when the first controller receives the detection response information sent from the MES; and
generating the second response record based on the second timestamp and the third timestamp.

6. The method of claim 5, wherein generating the second response record comprises:
acquiring a first query time based on the second timestamp and the third timestamp;
acquiring first query content; and
generating the second response record based on the first query time and the first query content.

7. The method of claim 6, wherein the first query content comprises at least at least one of thread invocation mechanism or hardware device performance of the MES.

8. The method of claim 2, further comprising:
generating an abnormal detection result in the case where the detection response information sent from the MES is not received within the preset waiting duration, wherein the abnormal detection result is used to represent that the communication link between the first controller and the MES is in an abnormal state;
updating a historical anomaly count N based on the abnormal detection result based on the anomaly detection result to obtain the current anomaly count N+1, wherein N is an integer more than or equal to 0, and the current anomaly count N+1 is used to represent that N+1 abnormal detection results are generated; and
generating a communication anomaly record in the case where the current abnormal number N+1 is greater than or equal to a preset count threshold.

9. The method of claim 8, wherein generating the communication anomaly record comprises:
acquiring N+1 fourth timestamps in one-to-one correspondence with the N+1 abnormal detection results; and
generating the communication anomaly record based on the N+1 fourth timestamps.

10. The method of claim 9, wherein generating the communication anomaly record based on the N+1 fourth timestamps comprises:
acquiring the second query time based on the N+1 fourth timestamps;
acquiring second query content; and
generating the communication anomaly record based on the second query time and the second query content.

11. The method of claim 10, wherein the second query content comprises at least one of message receiving mechanism, thread invocation mechanism, or hardware device performance of the MES.

12. An apparatus (400) for controlling station-passing of yarn spindle, applied to a first controller included in a system for controlling station-passing of the yarn spindle, and the system for controlling station-passing of the yarn spindle further including a manufacturing execution system, MES, and a plurality of second controllers, which are in communication with the first controller, wherein a second controller of the plurality of second controllers has a corresponding yarn spindle station for acquiring operational data related to the yarn spindle station and executing station-passing control operation for a yarn spindle product passing through the yarn spindle station;
the apparatus comprising:
an operational data receiving unit (401), configured to receive target operational data sent from a target controller by using a second controller of a plurality of second controllers as the target controller;
an operational data sending unit (402), configured to send the target operational data to the MES responsive to determining that a communication link between the first controller and the MES is in a normal state, wherein the MES is configured to obtain a target station-passing instruction based on the target operational data and send the target station-passing instruction to the first controller;
a station-passing instruction receiving unit (403), configured to receive the target station-passing instruction sent from the MES; and
a station-passing instruction sending unit (404), configured to send the target station-passing instruction to the target controller, wherein the target controller is configured to perform station-passing control operation on the yarn spindle product passing through a target station corresponding to the target controller based on the target station-passing instruction.

13. A non-transitory computer-readable storage medium storing a computer instruction thereon, wherein the computer instruction is used to cause a computer to execute the method of any one of claims 1 to 11.
